(19) Europäisches Patentamt
European Patent Office
Office européen des brevets

(11) **EP 1 563 633 B1**

(12) **EUROPEAN PATENT SPECIFICATION**

(45) Date of publication and mention of the grant of the patent:
**02.05.2007 Bulletin 2007/18**

(21) Application number: **03770034.1**

(22) Date of filing: **30.10.2003**

(51) Int Cl.:
*H04L 1/06* (2006.01)    *H04B 7/005* (2006.01)

(86) International application number:
**PCT/JP2003/013940**

(87) International publication number:
**WO 2004/040833 (13.05.2004 Gazette 2004/20)**

(54) **DYNAMIC POWER CONTROL FOR SPACE TIME DIVERSITY TRANSMIT ANTENNA PAIRS**

DYNAMISCHE LEISTUNGSREGELUNG FÜR RAUM-ZEITDIVERSITÄTSSENDEANTENNENPAARE

COMMANDE DE PUISSANCE DYNAMIQUE POUR PAIRES D'ANTENNES D'EMISSION EN DIVERSITE SPATIO-TEMPORELLE

(84) Designated Contracting States:
**DE FR GB**

(30) Priority: **31.10.2002 US 285269**

(43) Date of publication of application:
**17.08.2005 Bulletin 2005/33**

(73) Proprietor: **MITSUBISHI DENKI KABUSHIKI KAISHA**
**Chiyoda-ku**
**Tokyo 100-8310 (JP)**

(72) Inventors:
• **HORNG, Jyhchau**
 **Saratoga, CA 95070 (US)**
• **LI, Ling**
 **Matawan, NJ 07747 (US)**

(74) Representative: **Pfenning, Meinig & Partner GbR**
**Patent- und Rechtsanwälte**
**Theresienhöhe 13**
**80339 München (DE)**

(56) References cited:
**WO-A-01/69814**    **WO-A-02/43272**

• **TAO XIAOFENG ET AL: "Closed loop space-time block code" VTC FALL 2001. IEEE 54TH. VEHICULAR TECHNOLOGY CONFERENCE. PROCEEDINGS. ATLANTIC CITY, NJ, OCT. 7 - 11, 2001, IEEE VEHICULAR TECHNOLGY CONFERENCE, NEW YORK, NY: IEEE, US, vol. 1 OF 4. CONF. 54, 7 October 2001 (2001-10-07), pages 1093-1096, XP010562599 ISBN: 0-7803-7005-8**

**Description**

**Technical Field**

The invention relates generally to wireless communications, and more particularly to multiple input/multiple output wireless communications systems with dynamic power allocation.

**Background Art**

Transmit diversity is one of the key technologies used in third generation (3G) wireless communications systems. By transmitting the signal through multiple transmit antennas to multiple receive antennas spatial diversity gains can be achieved to enhance the system capacity. Space-time transmit diversity (STTD) is an open loop technique in which the symbols are modulated using space-time block code, see Alamouti, "A simple transmit diversity technique for wireless communications", IEEE J. Select. Areas Commun., 16:1451-1468, 1998.

The STTD scheme is adopted by 3GPP due to its simple implementation and maximal diversity gains. Transmit adaptive array (TXAA) is a closed loop transmit diversity technique adopted by 3GPP. The mobile receiver feedbacks the estimated optimal transmit weights to the base station. The base station uses this feedback information to adjust the power level of the transmitted signal so that the received power at the desired mobile receiver is maximized.

Simulation results show that the STTD is robust at higher velocities, while TXAA provides the biggest benefits at lower velocities, see Derryberry et al., "Transmit Diversity in 3G CDMA Systems," IEEE Comm. Magazine, vol.40, no.4, pp. 68-75, April 2002.

A mixture of open and closed loop diversity technique could be used to combat both fast and slow fading. Recently, an adaptive STTD (ASTTD) scheme has been described, which combines STTD with adaptive transmit power allocation in order to improve the performances of the STTD systems, see Huawei "STTD with Adaptive Transmitted Power Allocation," 3GPP TSG-R WG1 document, TSGR1#26 R1-02-0711, Gyeongju, Korea May 13-16, 2002.

Tao Xiaofeng et al. propose a scheme to obtain further gain in closed loop STBC in Tao Xiaofeng et al.: "Closed loop space-time block code" VTC FALL 2001. IEEE 54th. Vehicular Technology Conference Proceedings. Atlantic City, NJ, Oct. 7-11, 2001, IEEE Vehicular Technology Conference, New York, NY: IEEE, US, vol. 1 of 4. Conf. 54, 7 October 2001 (2001-10-07), pages 1093-1096, ISBN: 0-7803-7005-8. The authors also show a possibility to optimize the allocation of a fixed transmitter power budget between two transmit antennas.

**Disclosure of Invention**

A method for transmitting a stream of data symbols in a multiple-input/multiple-output (MIMO) wireless communications system including Nr transmitting antennas.

The stream of data symbols is first demultiplexed into M sub-streams, where $M = N_r/2$. Then, space-time transmit diversity encoding is applied to each sub-stream to generate a pair of transmit signals.

Power is allocated dynamically to each one of the pairs of transmitted signal according to a corresponding feedback signal received from a receiver of the transmit signal.

The feedback signal including a ratio of magnitude sums of channel coefficients for channels used for the transmitted signals.

**Brief Description of the Drawings**

Figure 1 is a block diagram of a multiple input/multiple output wireless communications systems that uses the invention; and

Figure 2 is a block diagram of a receiver of the system of Figure 1.

**Best Mode for Carrying Out the Invention**

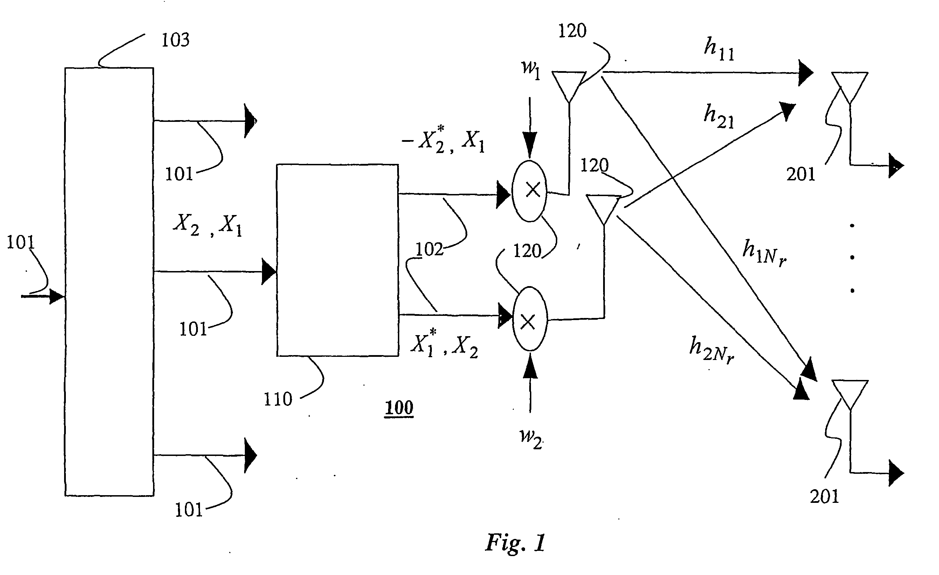

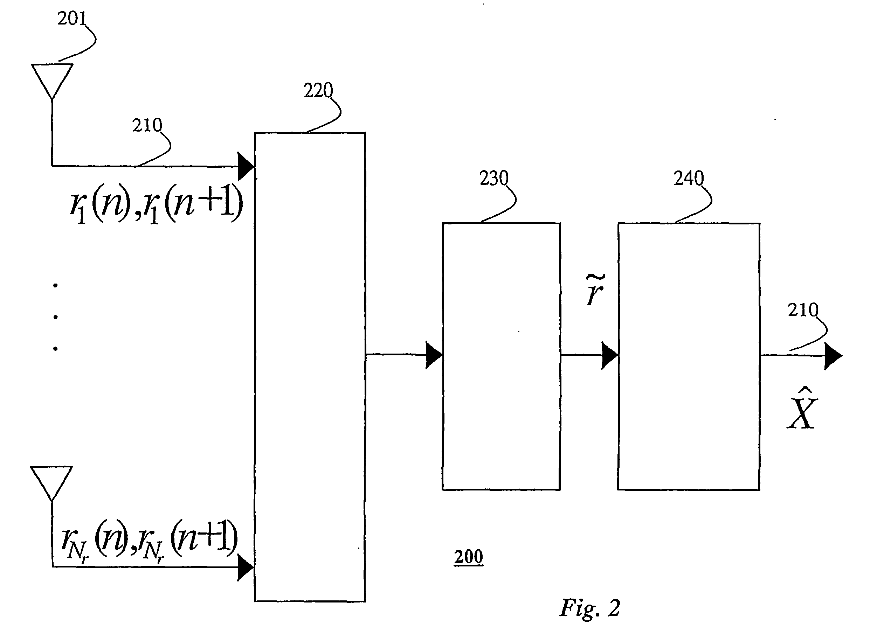

Figure 1 shows a MIMO system 100 that can use the invention. From a single input signal 101, an STTD encoder 110 produces multiple output signals 102 using demultiplexing 103. The power of each of the output signals is weighted 120 by a power amplifier before sent to multiple transmitter antennas 120 through channels having responses h to receiver antennas 201 of a receiver 200, see Figure 2.

The weights, $w_1$ and $w_2$, are real positive numbers which are selected to maximize the SNR at the receiver 200 with the constraint that $w_1{}^2 + w_2{}^2 = 1$. The STTD encoding 110 is a space-time block code which encodes the input signal $[X_1\ X_2]^T$ 101 into output signals 102

$$\begin{bmatrix} X_1 & -X_2^* \\ X_2 & X_1^* \end{bmatrix} \qquad (1)$$

where * denotes complex conjugate and each row of the matrix is assigned to the same transmit antenna 120.

Figure 2 shows the receiver 200 in greater detail. The receiver includes a combiner 220, an STTD decoder 230, and an interference cancellation stage 240.

Assume there are $N_r$ receiver antennas 201 at the receiver 200. A received signal $r_i(n)$ 210 at the $i$th receiver antenna can be expressed as

$$\underbrace{\begin{bmatrix} r_1(n) \\ r_1^*(n+1) \\ r_2(n) \\ r_2^*(n+1) \\ \vdots \\ r_{N_r}(n) \\ r_{N_r}^*(n+1) \end{bmatrix}}_{r(n)} = \underbrace{\begin{bmatrix} w_1 h_{11} & w_2 h_{21} \\ w_2 h_{21}^* & -w_1 h_{11}^* \\ w_1 h_{12} & w_2 h_{22} \\ w_2 h_{22}^* & -w_1 h_{12}^* \\ \vdots & \vdots \\ w_1 h_{1N_r} & w_2 h_{2N_r} \\ w_2 h_{2N_r}^* & -w_1 h_{1N_r}^* \end{bmatrix}}_{\widetilde{H}} \underbrace{\begin{bmatrix} X_1 \\ X_2 \end{bmatrix}}_{X} + \underbrace{\begin{bmatrix} v_1(n) \\ v_1^*(n+1) \\ v_2(n) \\ v_2^*(n+1) \\ \vdots \\ v_{N_r}(n) \\ v_{N_r}^*(n+1) \end{bmatrix}}_{v(n)} ,$$

$$(2)$$

where $h_{ij}$ are the channel coefficients of the channels between the $i^{th}$ transmitter antennas and the $j^{th}$ receiver antennas, and $v(n)$ is the additive white Gaussian noise sample at time instant n, which is assumed to be independent at all receiver antenna elements.

The received signals 210 from all antennas 201 are first combined 220 before passed to the STTD decoder 230. Therefore, the output $\widetilde{r}$ of the STTD decoder 230 corresponding to the two successive transmitted symbol in one space-time coding block is given by

$$\widetilde{r}(n) = \begin{bmatrix} \widetilde{r_1} \\ \widetilde{r_2} \end{bmatrix} = H^* r(n)$$

$$= \begin{bmatrix} h_{11}^* & h_{21} & h_{12}^* & h_{22} & \cdots & h_{1N_r}^* & h_{2N_r} \\ h_{21}^* & -h_{11} & h_{22}^* & -h_{12} & \cdots & h_{2N_r}^* & -h_{1N_r} \end{bmatrix} r(n) \qquad (3)$$

$$= H^* \widetilde{H} X + H^* v(n) = \begin{bmatrix} A & B \\ -B^* & A \end{bmatrix} \begin{bmatrix} X_1 \\ X_2 \end{bmatrix} + \widetilde{v}(n)$$

where

$$A = w_1 \sum_{j=1}^{N_r} |h_{1j}|^2 + w_2 \sum_{j=1}^{N_r} |h_{2j}|^2$$

$$(4)$$

$$B = w_2 \sum_{j=1}^{N_r} h_{1j}^{\bullet} h_{2j} - w_1 \sum_{j=1}^{N_r} h_{1j}^{\bullet} h_{2j}$$

and

$$\tilde{v}(n) = H^{\bullet} v(n) = \begin{bmatrix} \sum_{i=1}^{N_r} h_{1i}^{\bullet} v_i(n) + \sum_{i=1}^{N_r} h_{2i} v_i^{\bullet}(n+1) \\ \sum_{i=1}^{N_r} h_{2i}^{\bullet} v_i(n) - \sum_{i=1}^{N_r} h_{1i} v_i^{\bullet}(n+1) \end{bmatrix}$$

$$(5)$$

To cancel the cross-interference term B in Equation (4), the cross-interference cancellation stage 240 maximizes the SNR of the STTD decoded symbols. The output $\tilde{X}$ 250 is given by

$$\begin{bmatrix} \hat{X}_1 \\ \hat{X}_2 \end{bmatrix} = \begin{bmatrix} A & B \\ -B^{\bullet} & A \end{bmatrix}^{\bullet} \tilde{r}(n)$$

$$= \begin{bmatrix} |A|^2 + |B|^2 & 0 \\ 0 & |A|^2 + |B|^2 \end{bmatrix} \begin{bmatrix} X_1 \\ X_2 \end{bmatrix} + \begin{bmatrix} A^{\bullet} & -B \\ B^{\bullet} & A^{\bullet} \end{bmatrix} \tilde{v}(n)$$

$$(6)$$

Thus, the conditional SNR of the output signal can be obtained by

$$SNR \mid h_{ij} = \frac{(|A|^2 + |B|^2) E_s}{\sigma_v^2 \sum_j \sum_i |h_{ij}|^2}$$

$$(7)$$

where Es is the transmitted symbol energy and $\sigma_v^2$ is the additive white noise power.

Because the term A in Equation (4) contributes dominantly to the desired signal energy, one can maximize A instead of maximizing the SNR in Equation (7).

Thus, the optimum weight function is found by letting $dA/dw_1 = 0$ with the fixed power constraint, $w_1^2 + w_2^2 = 1$.

$$w_1 = \cfrac{1}{\sqrt{1 + \left( \cfrac{\left( \sum\limits_{j=1}^{N_r} \left|h_{2j}\right|^2 \right)^2}{\sum\limits_{j=1}^{N_r} \left|h_{1j}\right|^2} \right)}}$$

$$(8)$$

$$w_2 = \cfrac{1}{\sqrt{1 + \left( \cfrac{\left( \sum\limits_{j=1}^{N_r} \left|h_{1j}\right|^2 \right)^2}{\sum\limits_{j=1}^{N_r} \left|h_{2j}\right|^2} \right)}}$$

Equation 8 shows that just the ratio of the magnitude sum of the channel coefficients is sufficient for the transmitter to calculate the optimum transmit weight. This is much simpler than the prior art closed loop techniques (TXAA), which uses the amplitude and phase information of the propagation channels to calculate the transmit weights. It also leads to a reduced number of bits or more reliable transmission of feedback information in our invention.

The performance of the adaptive STTD can provide about a 0.8 dB SNR gain for a BER = $10^{-3}$, and a 1.0 dB gain for FER = $10^{-1}$. It should be noted that the invention can also be used for multiple transmit antennas and a single receive antenna.

**Claims**

1. A method for transmitting a stream of data symbols in a multiple-input/multiple-output wireless communication system including $N_r$ transmitting antennas, the method comprising:

    demultiplexing the stream of data symbols into M sub-streams, where M = $N_r/2$;
    space-time transmit diversity encoding each sub-stream into a pair of transmit signals; dynamically allocating power to each transmit signal of each pair according to a corresponding feedback signal received from a receiver, the feedback signal including a ratio of magnitude sums of channel coefficients for channels used for the transmit signal;

    wherein the power of the pair of transmit signals is respectively weighted by positive real numbers $w_1$ and $w_2$ such that $w_1^2 + w_2^2 = 1$,
    and wherein

$$w_1 = \cfrac{1}{\sqrt{1 + \left( \cfrac{\left( \sum\limits_{j=1}^{N_r} \left|h_{2j}\right|^2 \right)^2}{\sum\limits_{j=1}^{N_r} \left|h_{1j}\right|^2} \right)}}$$

    and

$$w_2 = \frac{1}{\sqrt{1 + \left(\dfrac{\sum_{j=1}^{N_r}|h_{1j}|^2}{\sum_{j=1}^{N_r}|h_{2j}|^2}\right)^2}}$$

where $h_{ij}$ represent the channel coefficients for a channel between an $i^{th}$ transmitter antenna and a $j^{th}$ receiver antenna, where Nr is the number of receiver antennas.

2. A transmitter (100) for a multiple-input/multiple-output wireless communication system including $N_r$ transmitting antennas (120), the transmitter comprising:

a demultiplexer (103) configured to output M sub-streams (101) of a stream of data symbols (101), where $M = N_r/2$;
a space-time transmit diversity encoder (110) configured to encode each sub-stream into a pair of transmit signals; and
a power amplifier (120) configured to dynamically allocate power to each transmit signal of each pair by weighting with positive real numbers $w_1$ and $w_2$ such that $w_1^2 + w_2^2 = 1$ according to a corresponding feedback signal received from a receiver (200), the feedback signal including a ratio of magnitude sums of channel coefficients for channels used for the transmit signal, and

$$w_1 = \frac{1}{\sqrt{1 + \left(\dfrac{\sum_{j=1}^{N_r}|h_{2j}|^2}{\sum_{j=1}^{N_r}|h_{1j}|^2}\right)^2}}$$

and

$$w_2 = \frac{1}{\sqrt{1 + \left(\dfrac{\sum_{j=1}^{N_r}|h_{1j}|^2}{\sum_{j=1}^{N_r}|h_{2j}|^2}\right)^2}}$$

where $h_{ij}$ represent the channel coefficients for a channel between an $i^{th}$ transmitter antenna and a $j^{th}$ receiver antenna, where $N_r$ is the number of receiver antennas.

**Patentansprüche**

1. Verfahren zum Senden eines Stroms von Datensymbolen in einem Mehrfacheingangs-/Mehrfachausgangs-Funk-kommunikationssystem enthaltend $N_r$ Sendeantennen, welches Verfahren aufweist: Demultiplexieren des Stroms von Datensymbolen in M Subströme, wobei $M = N_r/2$;

Raum-Zeit-Sende-Diversity-Codieren jedes Substroms in ein Paar von Sendesignalen; dynamisches Zuweisen von Leistung zu jedem Sendesignal jedes Paares gemäß einem entsprechenden, von einem Empfänger empfangenen Rückkopplungssignal, welches Rückkopplungssignal ein Verhältnis von Größensummen von Kanalkoeffizienten für für das Sendesignal verwendete Kanäle enthält;

wobei die Leistung des Paares von Sendesignalen jeweils durch positive reelle Zahlen $w_1$ und $w_2$ derart, dass $w_1^2 + w_2^2 = 1$ ist, gewichtet wird, und wobei

$$w_1 = \frac{1}{\sqrt{1 + \left(\frac{\sum_{j=1}^{N_r}\left|h_{2j}\right|^2}{\sum_{j=1}^{N_r}\left|h_{1j}\right|^2}\right)^2}}$$

and

$$w_2 = \frac{1}{\sqrt{1 + \left(\frac{\sum_{j=1}^{N_r}\left|h_{1j}\right|^2}{\sum_{j=1}^{N_r}\left|h_{2j}\right|^2}\right)^2}}$$

worin $h_{ij}$ die Kanalkoeffizienten für einen Kanal zwischen einer i-ten Sendeantenne und einer j-ten Empfängerantenne darstellt, wobei $N_r$ die Anzahl von Empfängerantennen ist.

2. Sender (100) für ein Mehrfacheingangs-/Mehrfachausgangs-Funkkommunikationssystem enthaltend $N_r$ Sendeantennen (120), welcher Sender aufweist: einen Demultiplexer (103), der ausgebildet ist zum Ausgeben von M Subströmen (101) eines Stroms von Datensymbolen (101), wobei M = $N_r$/2 ist; einen Raum-Zeit-Sende-Diversity-Codierer (110), der ausgebildet ist zum Codieren jedes Substroms in ein Paar von Sendesignalen; und

einen Leistungsverstärker (120), der ausgebildet ist zum dynamischen Zuweisen von Leistung zu jedem Sendesignal jedes Paares durch Gewichten mit positiven reellen Zahlen $w_1$ und $w_2$ derart, dass $w_1^2 + w_2^2 = 1$ ist, gemäß einem entsprechenden, von einem Empfänger (200) empfangenen Rückkopplungssignal, wobei das Rückkopplungssignal ein Verhältnis von Größensummen von Kanalkoeffizienten für für das Sendesignal verwendete Kanäle enthält, und

$$w_1 = \frac{1}{\sqrt{1 + \left(\frac{\sum_{j=1}^{N_r}\left|h_{2j}\right|^2}{\sum_{j=1}^{N_r}\left|h_{1j}\right|^2}\right)^2}}$$

und

$$w_2 = \cfrac{1}{\sqrt{1 + \left(\cfrac{\displaystyle\sum_{j=1}^{N_r}\left|h_{1j}\right|^2}{\displaystyle\sum_{j=1}^{N_r}\left|h_{2j}\right|^2}\right)^2}}$$

worin $h_{ij}$ die Kanalkoeffizienten für einen Kanal zwischen einer i-ten Sendeantenne und einer j-ten Empfängerantenne darstellt, wobei $N_r$ die Anzahl von Empfängerantennen ist.

**Revendications**

1.  Procédé pour émettre un flux de symboles de données dans un système de communication sans fil à entrées multiples/sorties multiples, incluant $N_r$ antennes émettrices, le procédé comprenant les étapes consistant à :

    démultiplexer le flux de symboles de données, en M sous-flux, où M = $N_r$/2;
    encoder en diversité d'émission spatio-temporelle chaque sous-flux, en une paire de signaux d'émission ;
    allouer dynamiquement de la puissance à chaque signal d'émission de chaque paire, en fonction d'un signal de rétroaction correspondant reçu à partir d'un récepteur, le signal de rétroaction incluant un rapport des sommes des amplitudes des coefficients de canaux pour les canaux utilisés pour le signal d'émission ;

    dans lequel la puissance de la paire de signaux d'émission est respectivement pondérée par les nombres réels positifs $w_1$ et $w_2$ de telle façon que $w_1{}^2 + w_2{}^2 = 1$, et dans lequel

$$w_1 = \cfrac{1}{\sqrt{1 + \left(\cfrac{\displaystyle\sum_{j=1}^{N_r}\left|h_{2j}\right|^2}{\displaystyle\sum_{j=1}^{N_r}\left|h_{1j}\right|^2}\right)^2}}$$

et

$$w_2 = \cfrac{1}{\sqrt{1 + \left(\cfrac{\displaystyle\sum_{j=1}^{N_r}\left|h_{1j}\right|^2}{\displaystyle\sum_{j=1}^{N_r}\left|h_{2j}\right|^2}\right)^2}}$$

où $h_{ij}$ représentent les coefficients de canal pour un canal entre une i[ème] antenne d'émetteur et une j[ème] antenne de récepteur, où $N_r$ est le nombre d'antennes de récepteurs.

8

**2.** Émetteur (100) pour un système de communication sans fil à entrées multiples/sorties multiples, incluant $N_r$ antennes émettrices (120), l'émetteur comprenant :

un démultiplexeur (103) configuré pour émettre en sortie les M sous-flux (101) d'un flux de symboles de données (101), où $M = N_r/2$ ;

un encodeur en diversité d'émission spatio-temporelle (110) configuré pour encoder chaque sous-flux, en une paire de signaux d'émission ; et

un amplificateur de puissance (120) configuré pour allouer dynamiquement de la puissance à chaque signal d'émission de chaque paire, en pondérant avec des nombres réels positifs $w_1$ et $w_2$ tels que $w_1^2 + w_2^2 = 1$, en fonction d'un signal de rétroaction correspondant reçu à partir d'un récepteur (200), le signal de rétroaction incluant un rapport des sommes des amplitudes des coefficients de canaux utilisés pour le signal d'émission, et

$$w_1 = \frac{1}{\sqrt{1 + \left( \dfrac{\sum\limits_{j=1}^{N_r} \left| h_{2j} \right|^2}{\sum\limits_{j=1}^{N_r} \left| h_{1j} \right|^2} \right)^2}}$$

et

$$w_2 = \frac{1}{\sqrt{1 + \left( \dfrac{\sum\limits_{j=1}^{N_r} \left| h_{1j} \right|^2}{\sum\limits_{j=1}^{N_r} \left| h_{2j} \right|^2} \right)^2}}$$

où $h_{ij}$ représentent les coefficients de canal pour un canal entre une i$^{\text{ème}}$ antenne d'émetteur et une j$^{\text{ème}}$ antenne de récepteur, où $N_r$ est le nombre d'antennes de récepteurs.

*Fig. 1*

EP 1 563 633 B1

Fig. 2